# EUROPÄISCHE PATENTSCHRIFT

(11) **EP 1 373 407 B1**
(45) Veröffentlichungstag und Bekanntmachung des Hinweises auf die Patenterteilung: **20.09.2006**
(21) Anmeldenummer: 02750534.6
(22) Anmeldetag: 05.03.2002
(51) Int. Cl.: C08L 61/06, D04H 1/60

(54) **BINDEMITTELMISCHUNG UND IHRE VERWENDUNG**
BINDING AGENT MIXTURE AND THE USE THEREOF
MELANGE DE LIANTS ET SON UTILISATION

(30) Priorität: 14.03.2001 DE 10112620
(43) Veröffentlichungstag der Anmeldung: 02.01.2004
(73) Patentinhaber: Hexion Specialty Chemicals GmbH, 58642 Iserlohn-Letmathe (DE)
(72) Erfinder: MÜLLER, Franz-Josef, 58642 Iserlohn (DE); ARBIA, Vito, 58762 Altena/Westf. (DE); WELLHAUS, Bernd, 58644 Iserlohn (DE)
(86) Internationale Anmeldenummer: PCT/EP2002/002389
(87) Internationale Veröffentlichungsnummer: WO 2002/072698

(56) Entgegenhaltungen:
- EP-A- 0 254 807
- WO-A-95/30034
- WO-A-96/16218

## Beschreibung

Die Erfindung betrifft Bindemittelmischungen auf Basis eines pulverförmigen Gemisches aus einem nicht wärmereaktiven Phenolharz und einem oder mehreren wärmereaktiven Kondensationsprodukten aus der Gruppe der Phenol-, Amino- oder Epoxidharze. Derartige Bindemittel sind aus EP-B 0 254 807 bekannt. Sie werden vornehmlich zur Herstellung von Textilvliesstoffen verwendet und ermöglichen dabei die Herstellung hochwertiger Produkte, die auch bei höherer Temperatur und Feuchtigkeit keinen störenden Amingeruch verbreiten.

Es ist ein Nachteil dieser Bindemittelmischungen, daß ihre Reaktivität nicht den Anforderungen an eine schnelle Massenproduktion entspricht, so daß man entweder zusätzliche Beschleuniger einsetzen oder die Taktzeiten bei der Herstellung entsprechender Formteile verlängern muß. Dies gilt insbesondere, wenn als wärmereaktive Komponente die ansonsten sehr vorteilhaften Kondensationsprodukte aus Bisphenolen und Formaldehyd eingesetzt werden.

Es ist daher Aufgabe der Erfindung, Bindemittelmischungen bereitzustellen, die ebenso wie die Bindemittelmischungen aus einem nicht wärmereaktiven Phenolharz und einem oder mehreren wärmereaktiven Kondensationsprodukten aus der Gruppe der Phenol-, Amino- oder Epoxidharze zur Herstellung hochwertiger Textilvliesstoffe geeignet sind, die auch bei höherer Temperatur und Feuchtigkeit keinen störenden Geruch verbreiten, deren Reaktivität aber im Vergleich zu den genannten Bindemitteln aber deutlich erhöht ist und die daher auch ohne Beschleuniger kurze Taktzeiten bei der Härtung erlauben.

Die Lösung der Aufgabe erfolgt durch Bindemittelmischungen gemäß der Ansprüche 1 bis 7. Die Bindemittel werden bevorzugt eingesetzt zur Herstellung von Textilvliesstoffen sowie als Bindemittel für Formmassen, Feuerfestmaterialien, Schleifmittel, Reibbeläge und im Gießereisektor wie in den Ansprüchen 8 bis 13 beansprucht.

Es wurde gefunden, daß die Reaktivität von Bindemittelmischungen aus einem nicht wärmereaktiven Phenolharz und einem oder mehreren wärmereaktiven Kondensationsprodukten aus der Gruppe der Phenol-, Amino- oder Epoxidharze wesentlich gesteigert wird, wenn dem Bindemittelgemisch zusätzlich als weitere Bindemittelkomponente Pulverlack zugegeben wird.

So beträgt z.B. die B-Zeit (nach DIN 16916-02-C2, gemessen bei 150°C) eines Gemisches aus gleichen Gewichts-Teilen eines Phenol-Novolaks und eines Resols auf Basis von Bisphenol A (Basisbindemittel) 6 min.
Wird dieses Basisbindemittel z. B. mit unterschiedlichen Mengen eines Pulverlackes basierend zu 70% auf reaktivem Lackpulver auf Basis von Epoxidharzen und zu 30% auf reaktivem Lackpulver auf Basis von Polyesterharzen vermischt, so haben die erhaltenen Bindemittelmischungen die folgenden B-Zeiten:

| Verhältnis Basisbindemittel:Pulverlackmischung | B-Zeit |
|---|---|
| 90 : 10 | 3 min, 30 s |
| 80 : 20 | 2 min, 05 s |
| 70 : 30 | 2 min, 05 s |
| 60 : 40 | 3 min, 10 s |
| 50 : 50 | 5 min, 30 s. |

Es wurde weiterhin gefunden, daß die Festigkeiten von mit diesen Mischungen hergestellten Textilvliesstoffen verglichen mit denen, die mit reinem Basisbindemittel hergestellt sind, wesentlich erhöht sind. Außerdem werden auch nach Lagerung bei höherer Temperatur und hoher Feuchtigkeit keine störenden Geruchsentwicklungen wahrgenommen.

Nicht wärmereaktive Phenolharze sind im sauren Milieu kondensierte Phenolharze der allgemeinen Formel 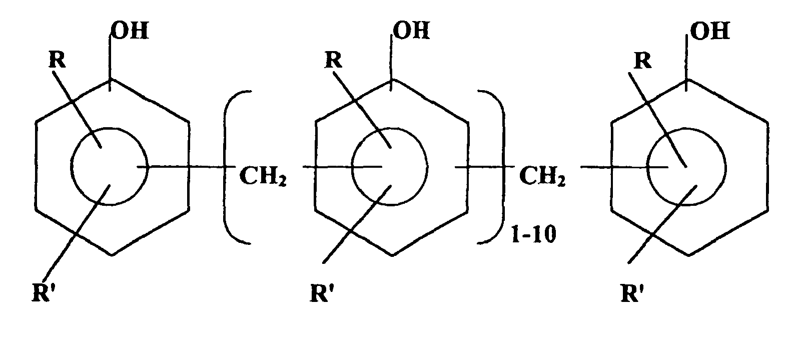 wobei R und R' gleich oder verschieden sind und Wasserstoff oder eine Alkylkette mit 1 bis 9 C-Atomen bedeuten.
Ausgangsprodukte sind Phenol, Kresole, Xylenole oder längerkettige Alkylphenole, die mit Formaldehyd oder einer unter Kondensationsbedingungen Formaldehyd abspaltenden Verbindung in saurem Medium kondensiert werden, wobei das Phenol/Formaldehyd-Verhältnis im Bereich von 1:0,6 bis 1:0,9 liegt.

Die wärmereaktiven Harze, die einzeln oder kombiniert eingesetzt werden können, können drei verschiedenen Gruppen entstammen: den Phenol-, Amino- und den Epoxidharzen Das nicht wärmereaktive Phenolharz wird mit einem oder mehreren dieser wärmereaktiven Kondensationsprodukte im Gewichtsverhältnis von 30 : 70 bis 90 : 10 eingesetzt.

Wärmereaktive Phenolharze (Resole) sind Reaktionsprodukte aus der alkalischen Kondensation einer phenolischen Verbindung mit Formaldehyd oder einer unter Kondensationsbedingungen Formaldehyd abspaltenden Verbindung. Als phenolische Verbindung können ein- oder mehrkernige Phenole oder Gemische der genannten Verbindungsklassen eingesetzt werden, und zwar sowohl ein- als auch mehrkernige Phenole.

Beispiele hierfür sind das Phenol selbst, sowie dessen alkyl-substituierten Homologen, wie o-, m- oder p-Kresol, Xylole oder höher alkylierte Phenole, außerdem halogensubstituierte Phenole wie Chlor- oder Bromphenol und mehrwertige Phenole wie Resorcin oder Brenzkatechin, sowie mehrkernige Phenole wie Naphthole oder Bisphenole. Die bevorzugten phenolischen Verbindungen sind Bisphenol A und Bisphenol F.
Die phenolischen Verbindungen und Formaldehyd werden bevorzugt im molaren Verhältnis von 1 : 1,0 bis 1 : 4,0 miteinander umgesetzt.

Die erfindungsgemäß einzusetzenden Phenolharze, die wärmereaktiven und die nicht wärmereaktiven sollen zusammen einen Gehalt an freiem Phenol von weniger als 1 % haben, und sie müssen in pulverförmiger Form vorliegen.

Als wärmereaktive Aminoharze sind sowohl Melamin- als auch Benzoguanamin- oder Harnstoff-Formaldehyd-Kondensationsprodukte sowie deren Mischkondensate einzusetzen. Sie können alleine, bevorzugt aber im Gemisch (in beliebigem Mischungsverhältnis) mit den Resolen, als wärmereaktive Bindemittelkomponente eingesetzt werden.

Als Epoxidharze können alle handelsüblichen festen Epoxidharze eingesetzt werden, bevorzugt Epoxidharze auf der Basis von Bisphenol A und Bisphenol F sowie epoxidierte Novolake.

Alle verwendeten Harze werden trocken und pulverförmig eingesetzt mit Korngrößen im Bereich zwischen 1 und 300µm, bevorzugt zwischen 10 und 60 µm.

Die in den erfindungsgemäßen Bindemitteln eingesetzten Pulverlacke sind pulverförmige, reaktive Lacke, die als Bindemittel duroplastische Harze wie Epoxid- oder Polyesterharze, zusätzlich aber auch Polyurethan- oder Acrylharze enthalten und die sortenrein oder als Gemisch eingesetzt werden können. Sie können farblos sein oder pigmentiert, wobei in der Regel eine Trennung nach Farbton nicht erforderlich ist. Die bevorzugten Pulverlacke sind Pulverlackrecyclingmaterialien. Diese fallen an als sog. Overspray aus Lackkabinen, als Fehlchargen bei der Herstellung von Pulverlacken, als Filterstäube bei der Herstellung und Verarbeitung von Pulverlacken oder als Rückstände aus dem Vermahlen der Pulver.
Die Korngrößen der eingesetzten Pulverlackrecyclingmaterialien liegen mit 1 bis 300µm, bevorzugt zwischen 10 und 60 µm in etwa dem gleichen Bereich wie die der Harze.
Werden Pulverlackrecyclingmaterialien verwendet, deren Korngröße für den gewünschten Anwendungszweck zu klein ist, können durch Verbacken einzelner Teilchen größere Korngrößen erhalten werden.

Die in den erfindungsgemäßen Bindemittelgemischen eingesetzten Pulverlackrecyclingmaterialien sind noch nicht vernetzt. Sie enthalten reaktive Gruppen wie Carboxyl-, Epoxid-, Hydroxyl-, Amino-, Amid- oder verkappte Isocyanatgruppen, die beim Erwärmen miteinander und mit den reaktiven Gruppen der nicht wärmereaktiven Phenolharze und der wärmereaktiven Kondensationsprodukten aus der Gruppe der Phenol-, Amino- oder Epoxidharze reagieren können.

Der Einsatz dieser Pulverlacke und/oder Pulverlackrecyclingmaterialien gemeinsam mit Phenolharzen als Bindemittel für Faservliese und Faservliesformteile ist aus WO 95/30034 und WO 96/16218 bekannt. Gemäß dieser beiden Patentanmeldungen wird dadurch eine Möglichkeit geschaffen, die als Abfall anfallenden Pulverlackrückstände noch zu verwerten.

Gemäß der vorliegenden Erfindung dienen Pulverlacke und/oder Pulverlackrecyclingmaterialien dazu, das bereits gute Eigenschaftsprofil hochwertiger Bindemittelgemische, die Phenolharz als eine Bindemittelkomponente enthalten, weiter zu verbessern. Dies eröffnet die Möglichkeit, die erfindungsgemäßen Bindemittelmischungen nicht nur als Bindemittel bei der Herstellung von Textilvliesstoffen einzusetzen, sondern ganz allgemein in allen traditionellen Anwendungsgebieten, in denen feste Phenolharze als Bindemittel verwendet werden. Insbesondere finden daher die erfindungsgemäßen Bindemittelmischungen als Bindemittel für Formmassen, Feuerfestmaterialien, Schleifmaterialien, Reibbeläge und Gießereisande in der Gießereiindustrie Verwendung. Dabei ist es ein weiterer Vorteil der Bindemittelmischungen, daß ihre Verwendung in den jeweiligen Anwendungsgebieten mit den bei diesen Anwendungen bekannten und üblichen Verfahren erfolgen kann.

Die erfindungsgemäßen Bindemittelmischungen bestehen aus einem Gemisch aus einem nicht wärmereaktiven Phenolharz und einem oder mehreren wärmereaktiven Kondensationsprodukten aus der Gruppe der Phenol-, Amino- oder Epoxidharze sowie einem Pulverlack. Dabei ist das nicht wärmereaktive Phenolharz mit dem wärmereaktiven Kondensationsprodukt im Gewichtsverhältnis von 30 : 70 bis 90 : 10 kombiniert. Dieses Gemisch wird mit Pulverlack im Gewichtsverhältnis von 90 : 10 bis 50 : 50 kombiniert, so daß die Bindemittelmischung folgende Zusammensetzung hat:
90 bis 50 Gew.Teile einer Mischung aus einem nicht wärmereaktive Phenolharz mit einem wärmereaktiven Kondensationsprodukt im Gewichtsverhältnis von 30 : 70 bis 90 : 10 und 10 bis 50 Gew.Teile eines Pulverharzes.

Die Herstellung der Bindemittelmischung erfolgt durch Vermischen der einzelnen pulverförmigen Komponenten miteinander. Dabei ist es gleichgültig, ob einzelne Komponenten, gleich welcher Art, bereits vorher miteinander vorgemischt sind oder ob alle Bestandteile gleichzeitig zusammengegeben und miteinander vermischt werden. Die Mischung ist bei Raumtemperatur nahezu unbegrenzt lagerfähig.

Die Härtung der Bindemittelmischung erfolgt in der Regel ohne Zusatz eines weiteren Härters oder Beschleunigers durch Erwärmen auf eine Temperatur im Bereich von 100 bis 220°C, bevorzugt von 140 bis 180°C.

## Patentansprüche

1. Bindemittelmischung auf Basis eines pulverförmigen Gemisches aus einem nicht wärmereaktiven Phenolharz und einem oder mehreren wärmereaktiven Kondensationsprodukten aus der Gruppe der Phenol-, Amino- oder Epoxidharze, **dadurch gekennzeichnet, daß** es zusätzlich Pulverlack enthält.

2. Bindemittelmischung nach Anspruch 1, **dadurch gekennzeichnet, daß** der Pulverlack ein Pulverlackrecyclingmaterial ist.

3. Bindemittelmischung nach Anspruch 1 oder 2, **dadurch gekennzeichnet, daß** der Pulverlack ein reaktives Lackpulver auf Basis von Epoxid- und/oder Polyesterharzen ist.

4. Bindemittelmischung nach Anspruch 3, **dadurch gekennzeichnet, daß** der Pulverlack zusätzlich reaktive Lackpulver auf Basis von Polyurethan und/oder Acrylatharzen enthält.

5. Bindemittelmischung nach einem oder mehreren der Ansprüche 1 bis 4, **dadurch gekennzeichnet, daß** es das nicht wärmereaktive Phenolharz mit dem wärmereaktiven Kondensationsprodukt im Gewichtsverhältnis von 30 : 70 bis 90 : 10 enthält.

6. Bindemittelmischungen nach einem oder mehreren der Ansprüche 1 bis 5, **dadurch gekennzeichnet, daß** es das Gemisch aus nicht wärmereaktivem Phenolharz mit dem wärmereaktiven Kondensationsprodukt und den Pulverlack im Gewichtsverhältnis von 90 : 10 bis 50 : 50 enthält.

7. Bindemittelmischung nach einem oder mehreren der Ansprüche 1 bis 6, **dadurch gekennzeichnet, daß** es als wärmereaktive Phenolharze alkalisch kondensierte Reaktionsprodukte aus der Kondensation von Bisphenolen mit Formaldehyd enthält.

8. Verwendung der Bindemittelmischung gemäß einem oder mehreren der Ansprüche 1 bis 7 als Bindemittel bei der Herstellung von Textilvliesstoffen.

9. Verwendung der Bindemittelmischung gemäß einem oder mehreren der Ansprüche 1 bis 7 als Bindemittel für Formmassen.

10. Verwendung der Bindemittelmischung gemäß einem oder mehreren der Ansprüche 1 bis 7 als Bindemittel für Feuerfestmaterialien.

11. Verwendung der Bindemittelmischung gemäß einem oder mehreren der Ansprüche 1 bis 7 als Bindemittel für Schleifmaterialien.

12. Verwendung der Bindemittelmischung gemäß einem oder mehreren der Ansprüche 1 bis 7 als Bindemittel für Reibbeläge.

13. Verwendung der Bindemittelmischung gemäß einem oder mehreren der Ansprüche 1 bis 7 als Bindemittel in der Gießereiindustrie.

## Claims

1. Binder mixture based on a pulverulent mix of a non-thermoreactive phenolic resin and one or more thermoreactive condensation products from the group consisting of phenolic resins, amino resins and epoxy resins, **characterized in that** it further comprises powder coating material.

2. Binder mixture according to Claim 1, **characterized in that** the powder coating material is a recycled powder coating material.

3. Binder mixture according to Claim 1 or 2, **characterized in that** the powder coating material is a reactive coating powder based on epoxy resins and/or polyester resins.

4. Binder mixture according to Claim 3, **characterized in that** the powder coating material further comprises reactive coating powders based on polyurethane [sic] and/or acrylic resins.

5. Binder mixture according to one or more of Claims 1 to 4, **characterized in that** it comprises the non-thermoreactive phenolic resin with the thermoreactive condensation product in a weight ratio of from 30:70 to 90:10.

6. Binder mixture according to one or more of Claims 1 to 5, **characterized in that** it comprises the mix of non-thermoreactive phenolic resin with the thermoreactive condensation product and the powder coating material in a weight ratio of from 90:10 to 50:50.

7. Binder mixture according to one or more of Claims 1 to 6, **characterized in that** it comprises, as thermoreactive phenolic resins, alkalinically condensed reaction products from the condensation of bisphenols with formaldehyde.

8. Use of the binder mixture according to one or more of Claims 1 to 7 as a binder in the production of textile nonwovens.

9. Use of the binder mixture according to one or more of Claims 1 to 7 as a binder for moulding compounds.

10. Use of the binder mixture according to one or more of Claims 1 to 7 as a binder for refractory materials.

11. Use of the binder mixture according to one or more of Claims 1 to 7 as a binder for abrasive materials.

12. Use of the binder mixture according to one or more of Claims 1 to 7 as a binder for friction linings.

13. Use of the binder mixture according to one or more of Claims 1 to 7 as a binder in the foundry industry.

## Revendications

1. Composition de liant à base d'un mélange pulvérulent d'une résine phénolique non réactive à la chaleur et d'un ou plusieurs produits de condensation réactifs à la chaleur, choisis dans le groupe des résines phénoliques, amino et époxy, **caractérisée en ce qu'**elle contient en outre une peinture en poudre.

2. Composition de liant selon la revendication 1, **caractérisée en ce que** la peinture en poudre est une matière de recyclage de peinture en poudre.

3. Composition de liant selon la revendication 1 ou 2, **caractérisée en ce que** la peinture en poudre est une poudre de peinture réactive à base de résines époxy et/ou polyester.

4. Composition de liant selon la revendication 3, **caractérisée en ce que** la peinture en poudre contient en outre des poudres de peinture réactives à base de polyuréthanne et/ou de résines acrylate.

5. Composition de liant selon une ou plusieurs des revendications 1 à 4, **caractérisée en ce qu'**elle contient la résine phénolique non réactive à la chaleur avec le produit de condensation réactif à la chaleur en un rapport pondéral de 30:70 à 90:10.

6. Composition de liant selon une ou plusieurs des revendications 1 à 5, **caractérisée en ce qu'**elle contient le mélange de résine phénolique non réactive à la chaleur avec le produit de condensation réactif à la chaleur et la peinture en poudre en un rapport pondéral de 90:10 à 50:50.

7. Composition de liant selon une ou plusieurs des revendications 1 à 6, **caractérisée en ce qu'**elle contient en tant que résines phénoliques réactives à la chaleur des produits de réaction condensés par voie alcaline, provenant de la condensation de bisphénols avec le formaldéhyde.

8. Utilisation de la composition de liant selon une ou plusieurs des revendications 1 à 7, en tant que liant dans la production de non-tissés textiles.

9. Utilisation de la composition de liant selon une ou plusieurs des revendications 1 à 7, en tant que liant pour matières à mouler.

10. Utilisation de la composition de liant selon une ou plusieurs des revendications 1 à 7, en tant que liant pour matériaux ignifuges.

11. Utilisation de la composition de liant selon une ou plusieurs des revendications 1 à 7, en tant que liant pour matériaux abrasifs.

12. Utilisation de la composition de liant selon une ou plusieurs des revendications 1 à 7, en tant que liant pour garnitures de friction.

13. Utilisation de la composition de liant selon une ou plusieurs des revendications 1 à 7, en tant que liant dans l'industrie de la fonderie.
